(19) Europäisches Patentamt
European Patent Office
Office européen des brevets

(11) EP 2 061 006 B1

(12) FASCICULE DE BREVET EUROPEEN

(45) Date de publication et mention de la délivrance du brevet:
**26.04.2017 Bulletin 2017/17**

(51) Int Cl.:
***G06T 7/00*** *(2017.01)*

(21) Numéro de dépôt: **08168468.0**

(22) Date de dépôt: **06.11.2008**

(54) **Procédé de détection d'un phénomène perturbateur de visibilité pour un véhicule**

Erfassungsverfahren eines Störphänomens der Sicht für ein Fahrzeug

Method of detecting a phenomenon that can reduce visibility for a vehicle

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **16.11.2007 FR 0708073**

(43) Date de publication de la demande:
**20.05.2009 Bulletin 2009/21**

(73) Titulaire: **Valeo Vision**
**93012 Bobigny Cedex (FR)**

(72) Inventeurs:
• **Hue, David**
**78400, CHATOU (FR)**
• **Rebut, Julien**
**75019, PARIS (FR)**

(56) Documents cités:
**EP-A- 1 715 456     FR-A- 2 847 367**

• **NICOLAS HAUTIÉRE ET AL: "Automatic fog detection and estimation of visibility distance through use of an onboard camera" MACHINE VISION AND APPLICATIONS, SPRINGER-VERLAG, BE, vol. 17, no. 1, 1 avril 2006 (2006-04-01), pages 8-20, XP019323919 ISSN: 1432-1769**

# Description

## Domaine de l'invention

La présente invention concerne un procédé de détection d'un phénomène perturbateur de visibilité pour un véhicule automobile, et un dispositif de détection permettant de mettre en oeuvre ledit procédé.

Elle trouve une application particulière dans le domaine des véhicules automobiles.

## Etat de la technique

Dans le cas d'une application à un véhicule automobile, un procédé de détection d'un phénomène perturbateur de visibilité, tel que du brouillard, connu de l'état de la technique, utilise une image vidéo pour détecter de nuit du brouillard lorsque les projecteurs sont en position Route de sorte à mesurer la distance de visibilité.

A cet effet, il utilise le halo lumineux formant une ellipse qui est généré par la diffusion de la lumière à travers la nappe de brouillard. La détection du brouillard se fait en fonction des paramètres de cette ellipse et le calcul d'une erreur d'approximation entre ladite ellipse et le halo.

Un problème de cet état de la technique est qu'il ne permet pas de détecter un brouillard de moyenne ou faible densité, car un tel brouillard ne génère pas de halo assez visible pour former une ellipse lorsqu'il est éclairé par les projecteurs, ledit halo ne pouvant en conséquence être utilisé pour la détection du brouillard. "Automatic fog detection and estimation of visibility distance through use of an onboard camera" par N. Hautière et publié en Avril 2006 presente une technique de mesure de la distance de visibilité dans des conditions de brouillard basée sur le calcul du point d'inflexion global de la courbe verticale des valeurs de médianes horizontales de niveaux de gris situés dans une bande d'image verticale.

## Objet de l'invention

La présente invention a pour but la détection d'un phénomène perturbateur de visibilité tel que du brouillard, de nuit, et ce quelle que soit la position des projecteurs, en position Route ou Code et quelle que soit la densité du brouillard.

Selon un premier objet de l'invention, ce but est atteint par un procédé de détection d'un phénomène créant une perturbation atmosphérique de sorte à engendrer une perte de visibilité pour un utilisateur d'un véhicule automobile selon la revendication 1, comportant les étapes de :

- déterminer une région d'intérêt dans une image acquise de l'environnement du véhicule, la région d'intérêt étant verticale et occupant des parties de l'image de part et d'autre de la ligne d'horizon ;

- déterminer une courbe de niveaux de gris, en ne prenant en compte que la valeur médiane des niveaux de gris des pixels situés dans la région d'intérêt des lignes de l'image.

Un tel procédé est connu de l'article de Nicolas Hautière et al : « Automatic fog detection and estimation of visibility distance through use of an onboard camera » paru dans la revue « Machine Vision and Application », Springer-Verlag, BE, vol. 17, N° 1, du 1 avril 2006.

Selon l'invention, le procédé comporte en outre les étapes consistant à :

- calculer au moins une tangente à partir d'un point d'intérêt dans ladite courbe de niveaux de gris, ce point étant situé au dessus de la ligne d'horizon ;
- déterminer un coefficient directeur à partir de ladite tangente ;
- déduire la présence du phénomène à partir de la valeur du coefficient directeur déterminé.

Comme on va le voir en détail par la suite, le coefficient directeur de la tangente calculée dans la courbe de niveaux de gris va se modifier en fonction des variations de l'atmosphère environnante autour d'un véhicule automobile et devant le véhicule et donc en fonction de la présence de brouillard qui va modifier cette atmosphère. Ce coefficient directeur va ainsi permettre de détecter du brouillard quelque soit sa densité et quelque soit la position des projecteurs utilisée, notamment lorsque les projecteurs sont en position Code. De plus, un tel procédé est simple à mettre en oeuvre.

Le procédé présente en outre les caractéristiques suivantes.

- Le procédé comporte une étape supplémentaire de déterminer la présence d'un phénomène perturbateur en fonction d'au moins une valeur seuil dudit coefficient directeur. Cela permet non seulement de détecter la présence du phénomène perturbateur mais également de déterminer sa densité. Selon des modes de réalisation non limitatifs,
- Le procédé comporte une étape supplémentaire de déterminer une distance de visibilité en fonction du coefficient directeur déterminé. Cela permet de fournir par la suite une vitesse maximale de conduite pour garantir une distance de sécurité optimale.
- Le point d'intérêt est un point caractéristique d'un début de diffusion de lumière au dessus de la coupure d'un faisceau lumineux émis par des projecteurs du véhicule en présence du phénomène perturbateur de visibilité. Cela permet de détecter la présence dudit phénomène perturbateur.
- Le point d'intérêt est l'origine de la courbe de niveaux de gris. Cela permet de ne pas dépendre des caractéristiques de la route. Par ailleurs, ce point est facile à déterminer.
- Le véhicule comporte un angle au volant, et ladite région d'intérêt est déterminée dans ladite image en fonction dudit angle au volant. Cela permet de prendre en compte la direction de la route sur laquelle se déplace le véhicule et ainsi d'avoir une région d'intérêt homogène même lorsque la route est sinueuse.

Selon un deuxième objet de l'invention, elle concerne un dispositif de détection d'un phénomène créant une perturbation atmosphérique de sorte à engendrer une perte de visibilité pour un utilisateur d'un véhicule automobile selon la revendication 6, comportant :

- une unité de contrôle pour :

  - déterminer une région d'intérêt dans une image acquise de l'environnement du véhicule, la région d'intérêt étant verticale et occupant des parties de l'image de part et d'autre de la ligne d'horizon ;
  - déterminer une courbe de niveaux de gris, en ne prenant en compte que la valeur médiane des niveaux de gris des pixels situés dans la région d'intérêt des lignes de l'image.

Selon ce deuxième objet, en outre, l'unité de contrôle :

- calcule au moins une tangente à partir d'un point d'intérêt dans ladite courbe de niveaux de gris, ce point étant situé au dessus de la ligne d'horizon ;
- détermine un coefficient directeur à partir de ladite tangente ;
- déduit la présence du phénomène à partir de la valeur du coefficient directeur déterminé.

Selon un troisième objet de l'invention, elle concerne un produit programme d'ordinateur comportant une ou plusieurs séquences d'instructions exécutables par une unité de traitement d'information, l'exécution desdites séquences d'instructions permettant une mise en oeuvre du procédé selon l'une quelconque des caractéristiques précédentes.

**Brève description des figures**

D'autres caractéristiques et avantages de la présente invention seront mieux compris à l'aide de la description et des dessins non limitatifs parmi lesquels :

- la Fig. 1 représente un diagramme d'un mode de réalisation non limitatif du procédé de détection selon l'invention ;

- la Fig. 2 est une représentation schématique d'une image de l'environnement d'un véhicule acquise par le procédé de la Fig. 1 en l'absence de brouillard ;

- la Fig. 3 est une représentation schématique d'une image de l'environnement d'un véhicule acquise par le procédé de la Fig. 1 en présence de brouillard ;

- la Fig. 4 représente l'image de la Fig. 2 et une courbe de niveaux de gris associée ;

- la Fig. 5 représente l'image de la Fig. 3 et une courbe de niveaux de gris associée ;

- la Fig. 6 représente l'image de la Fig. 2 sur laquelle est superposée la courbe de niveaux de gris de la Fig. 4 ;

- la Fig. 7 représente l'image de la Fig. 3 sur laquelle est superposée la courbe de niveaux de gris de la Fig. 5 ;

- la Fig. 8 illustre une variation en fonction du temps :

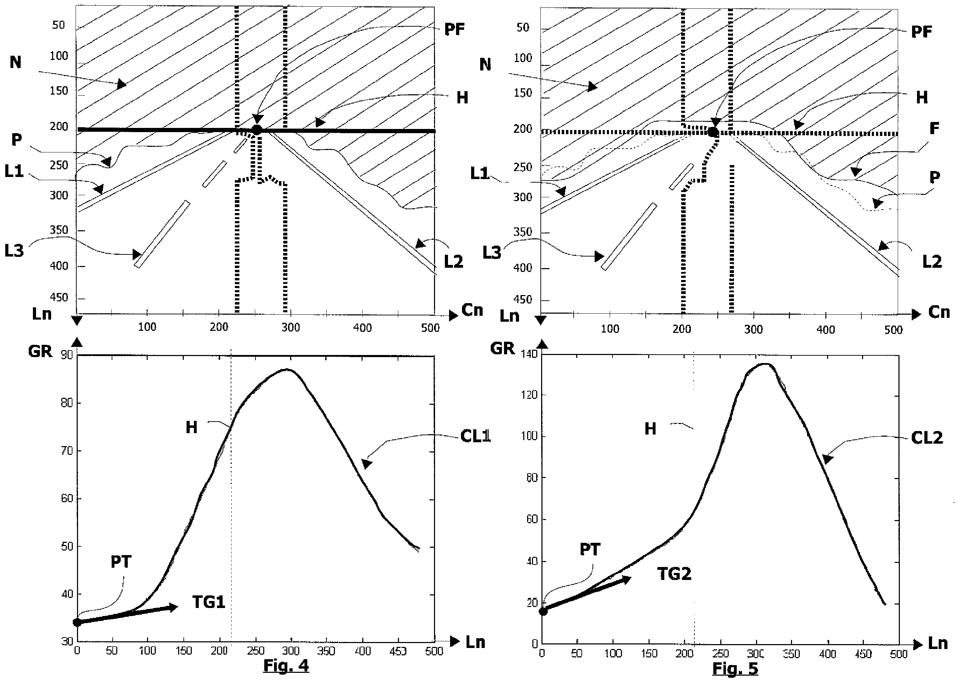

  - d'une distance de visibilité en fonction d'un coefficient directeur d'une tangente issue d'une courbe de niveaux de gris telle que celle illustrée à la Fig. 5, et

  - d'une distance de visibilité en fonction de données empiriques acquises ; et

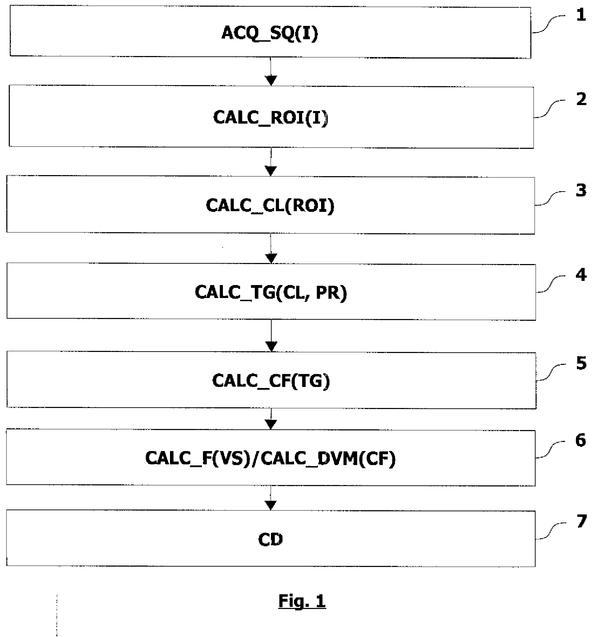

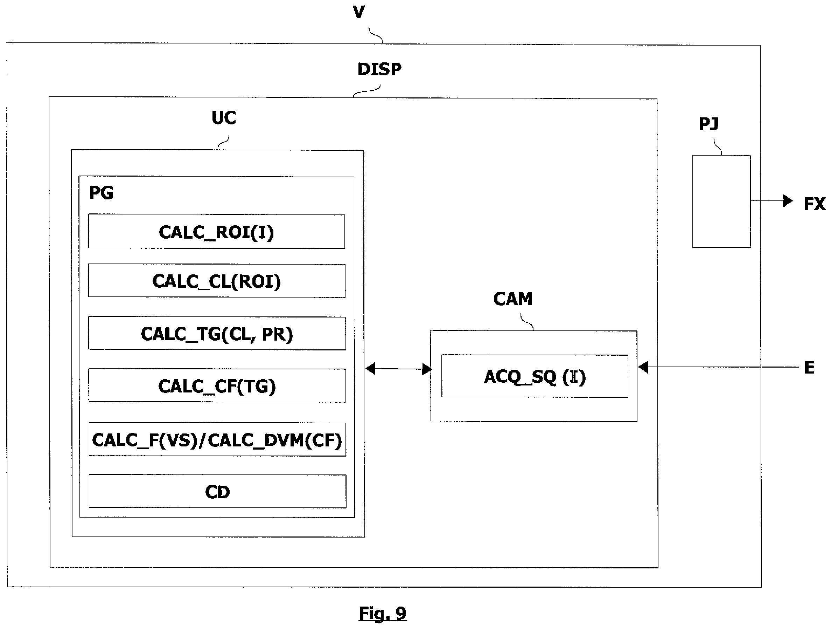

- la Fig. 9 illustre un mode de réalisation non limitatif d'un dispositif de mise en oeuvre du procédé de la Fig. 1.

**Description détaillée de modes de réalisation non limitatifs de l'invention**

Le procédé de détection d'un phénomène perturbateur de visibilité selon l'invention est décrit dans un mode de réalisation non limitatif à la Fig. 1.
Dans cette application, la détection se fait à partir d'un dispositif de détection embarqué dans un véhicule V, le véhicule comprenant notamment :

- des projecteurs PJ, et
- une caméra vidéo CAM décrite plus loin.

Dans la suite de la description, un phénomène perturbateur de visibilité F tel que du brouillard est pris comme exemple non limitatif. De plus, dans la suite de la description, les projecteurs PJ du véhicule V en position Code sont pris comme exemple non limitatif.
Bien entendu, le procédé peut s'appliquer à d'autres phénomènes perturbateurs de visibilité, c'est-à-dire tout phénomène F qui crée une perturbation atmosphérique de sorte à engendrer une perte de visibilité pour un utilisateur du véhicule V, tel que de la pluie forte ou encore des projections d'eau (appelées Gischt en allemand ou Spray en anglais) générées par des véhicules devançant le véhicule V considéré.

Comme on va le voir en détail ci-après, le coefficient directeur d'une tangente calculée à partir d'un point d'intérêt dans une courbe de niveaux de gris d'une image acquise I est utilisé pour déterminer la présence du brouillard F. En effet, on se base sur le fait que ce coefficient directeur évolue de la même manière que la distance de visibilité DVM.

Le procédé de détection comporte les étapes suivantes telles qu'illustrées à la Fig 1 :

- déterminer une région d'intérêt ROI dans une image I acquise de l'environnement du véhicule V (étape CALC_ROI(I)) ;

- déterminer une courbe de niveaux de gris CL à partir de ladite région d'intérêt ROI (étape CALC_CL(ROI)) ;

- calculer au moins une tangente TG à partir d'un point d'intérêt PT dans ladite courbe de niveaux de gris CL (étape CALC_TG(CL, PR)) ; et

- déterminer un coefficient directeur CF à partir de ladite tangente TG (étape CALC_CF(TG)).

Dans un mode de réalisation non limitatif, il comporte en outre une étape supplémentaire de :

- déterminer la présence de brouillard F en fonction d'au moins une valeur seuil VS dudit coefficient directeur CF (étape CALC_F(VS)).

Dans un mode de réalisation non limitatif, il comporte en outre une étape supplémentaire de :

- déterminer une distance de visibilité DVM en fonction du coefficient directeur déterminé CF (étape CALC_DVM(CF)).

On notera que ces deux modes de réalisation peuvent être combinés ensemble.

Dans un mode de réalisation non limitatif, il comporte en outre une étape de :

- acquérir au moins une image I par une caméra CAM (étape ACQ_SQ(I)).

On notera que cette étape d'acquisition d'image I peut ne pas être compris dans le procédé décrit, mais peut faire partie d'un autre procédé exécuté en amont du procédé décrit.

Les étapes sont décrites en détail ci-après.

**Dans une première étape 1),** on acquiert au moins une image I par la caméra du véhicule V.

La caméra vidéo CAM étant placée, dans l'exemple pris, à l'avant du véhicule V, l'image acquise I correspond à l'environnement E du véhicule V se trouvant dans le champ de la caméra CAM et donc à l'avant du véhicule V. On va donc détecter un phénomène perturbateur F tel que du brouillard se trouvant à l'avant du véhicule V.

La lumière issue d'un faisceau lumineux FX émis depuis un des projecteurs PJ est diffusée en présence de particules du brouillard F en suspension dans l'atmosphère. La longueur d'onde de ce faisceau lumineux étant compatible avec le spectre d'analyse de la camera CAM, et les particules constitutives du brouillard F se situant dans le champ de vision de la camera CAM, il est alors possible de capter une image intégrant la lumière diffusée dans le brouillard F.

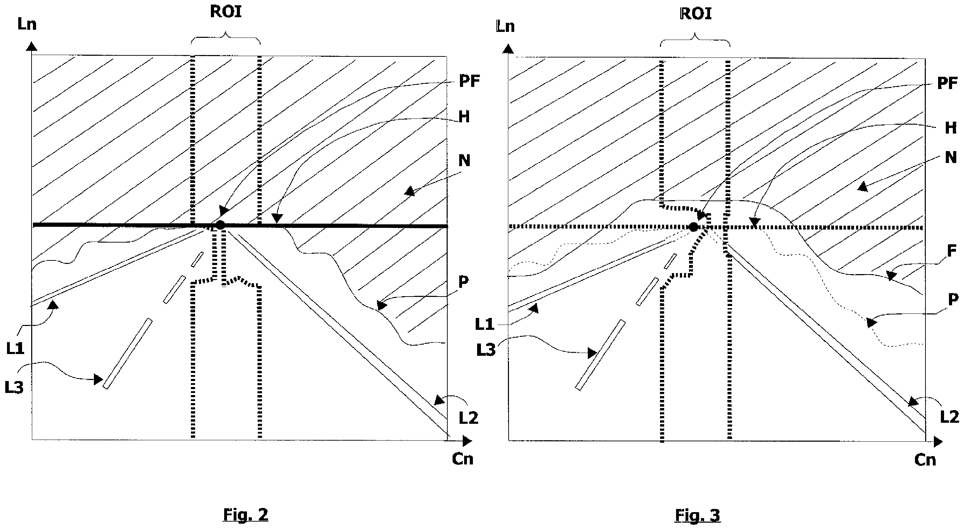

La Fig. 2 montre un exemple schématique d'image acquise I de nuit en l'absence de brouillard F, tandis que la Fig. 3 montre un exemple schématique d'une image acquise I de nuit en présence de brouillard F. En abscisse d'une image I sont représentées les colonnes Cn de cette image I, tandis qu'en ordonnée sont représentées les lignes Ln de cette image I.

Ces images I donnent un aperçu de la lumière diffusée de nuit avec un faisceau lumineux FX de projecteurs PJ.

La partie blanche représente la lumière diffusée de nuit avec le faisceau lumineux FX, tandis que la partie hachurée en diagonale notée N représente l'environnement E, ici à l'avant du véhicule V, dans le champ de la caméra CAM non éclairé par le faisceau lumineux FX.

Sur les deux figures Fig. 2 et Fig. 3, on peut voir :

- une route sur laquelle roule le véhicule V, représentée par les deux lignes de marquage au sol L1 et L2, et celle du milieu L3 ;

- un paysage P bordant la route ; et

- la ligne d'horizon H.

Sur la Fig. 3, le paysage P bordant la route est représenté en pointillé car il est voilé par le brouillard F représenté de façon schématique. Il en va de même pour la ligne d'horizon H.

**Dans une deuxième étape 2),** on détermine une région d'intérêt ROI dans ladite image I.

Dans des exemples non limitatifs la région d'intérêt ROI peut être :

- une ligne droite verticale passant par un point de référence PR dans l'image I,

- déterminée au voisinage du point de référence PR par une surface se situant de part et d'autre du point de référence telle qu'illustrée sur la

Fig. 2 et la Fig. 3 par lignes en pointillés.

Dans un mode de réalisation non limitatif, le point de référence PR est le point de fuite PF tel qu'illustré sur les Fig. 2 et Fig. 3.

Dans une variante de ce mode, le point de fuite PF est centré sur l'image I acquise. Ainsi, pour un exemple d'image I de format 640*480, son abscisse PFx se situe à 320 pixels, son ordonnée PFy est sur la ligne d'horizon H. On se place dans le cas où l'axe optique de la caméra CAM est parallèle à la direction du véhicule V.

Une région d'intérêt ROI selon le deuxième exemple de réalisation est déterminée de la manière suivante, dans un mode de réalisation non limitatif :

- dans une première étape, on détermine les contours dans l'image I de sorte à enlever des zones dans l'image I non homogènes. Dans des exemple non limitatifs, des méthodes de détection de contours (appelées « edge method » en anglais) telles que les méthodes Sobel, Prewitt, Roberts, Zero-cross, Canny etc. peuvent être utilisées ;

- dans une deuxième étape, on détermine la région d'intérêt ROI en partant de la ligne d'horizon H et en utilisant un algorithme d'accroissement de région vers le haut et vers le bas de l'image acquise I, bien connue de l'homme du métier. On notera que pour déterminer la ligne d'horizon H, on peut dans des exemples non limitatifs, la déterminer à partir d'un calcul de point de fuite PF dans l'image I issu de l'intersection du tracé des lignes blanches L1 et L2 sur la route, ou encore la déterminer à partir de capteurs d'assiette.

La détermination de la ligne d'horizon H dans une image étant connue de l'homme du métier, elle n'est pas décrite en détail ici.

Ainsi, on obtient une région d'intérêt ROI homogène dans laquelle sont exclus :

- le bruit, les parasites, et

- les objets non homogènes tels que des véhicules, ou les lignes blanches de la route telles que la ligne L3, comme illustré sur la Fig. 2 et la Fig. 3.

Dans un mode de réalisation non limitatif, afin d'avoir une région ROI homogène même lorsque la route est sinueuse, en outre la région d'intérêt ROI est déterminée dans ladite image I en fonction de l'angle au volant $\alpha$ du véhicule V.

Dans une première variante de réalisation non limitative :

- la région d'intérêt ROI est centrée par rapport au point de référence PR (vu précédemment) dans l'image I, lorsque l'angle au volant $\alpha$ est nul ; et
- la région d'intérêt ROI est décalée latéralement par rapport au point de référence PR dans l'image I, lorsque l'angle au volant $\alpha$ n'est pas nul. Dans un exemple non limitatif, la région d'intérêt ROI est décalée de l'angle au volant $\alpha$ fois trois.

Ainsi, lorsque l'angle au volant $\alpha$ est positif, la région d'intérêt ROI est décalée à droite sur l'image I, tandis que lorsque l'angle au volant $\alpha$ est négatif, la région d'intérêt ROI est décalée à gauche sur l'image I. Par exemple, si l'angle au volant $\alpha$ est égale à 10°, la région d'intérêt ROI est décalée de 30 pixels à droite par rapport au point de référence PR, et est donc centrée sur un nouveau point de référence de 320+30 pixels.

Dans une deuxième variante de réalisation non limitative :

- la région d'intérêt ROI est centrée par rapport au point de référence PR (vu précédemment) dans l'image I, lorsque l'angle au volant $\alpha$ est inférieur ou égal à 15° en valeur absolue ; et
- la région d'intérêt ROI est décalée latéralement par rapport au point de référence PR dans l'image I, lorsque l'angle au volant $\alpha$ est supérieur à 15° en valeur absolue. Dans un exemple non limitatif, la région d'intérêt ROI est décalée de l'angle au volant $\alpha$ fois trois. Ce seuil de 15° est caractéristique d'une route qui est sinueuse. Lorsque l'angle au volant $\alpha$ est inférieur à 15° en valeur absolue, en général, la route est en ligne droite, mais c'est le conducteur du véhicule V qui ne conduit pas droit.

Ainsi, lorsque l'angle au volant $\alpha$ est supérieur à +15°, la région d'intérêt ROI est décalée à droite sur l'image I (la direction de la route va vers la droite), tandis que lorsque l'angle au volant $\alpha$ est inférieur à -15°, la région d'intérêt ROI est décalée à gauche sur l'image I (la direction de la route va vers la gauche).

Par exemple, si l'angle au volant $\alpha$ est égale à -18°, la région d'intérêt ROI est décalée de 54 pixels à gauche par rapport au point de référence PR, et est donc centrée sur un nouveau point de référence de 320-54 pixels.

Ainsi, le fait de déterminer la position de la région d'intérêt ROI (et plus particulièrement sa position par rapport à l'axe des abscisses) dans l'image acquise I en fonction de l'angle au volant $\alpha$, permet de prendre en compte la direction de la route et ainsi d'éviter les obstacles tels que talus, arbres, etc. se situant en face du véhicule lorsque la route est sinueuse. La région d'intérêt ROI est ainsi plus homogène.

**Dans une troisième étape 3),** on détermine une courbe de niveaux de gris CL à partir de ladite région d'intérêt ROI.

L'intérêt est que la présence de brouillard F va modifier la forme de la courbe de niveaux de gris de sorte qu'en analysant cette courbe, on va pouvoir déterminer la présence de brouillard F.

Dans un mode de réalisation non limitatif, cette courbe de niveaux de gris CL est déterminée de la manière suivante. Pour chaque ligne Ln de l'image acquise I, on ne prend en compte que les pixels de la région d'intérêt ROI et on applique une combinaison de pixels Px de manière à obtenir une valeur GR pour chaque ligne, cette valeur GR étant par exemple une valeur de niveau de gris dans le cas d'une image vidéo (comme décrit plus loin).

Dans un exemple de réalisation non limitatif, la combinaison est la valeur médiane des niveaux de gris de chaque pixel Px de la ligne Ln considérée. L'avantage de la médiane est d'estimer la valeur moyenne des niveaux de gris tout en s'affranchissant des problèmes de bruits dans l'image I.

Un premier exemple de courbe de niveaux de gris CL1 est illustré sur la Fig. 4 dans le cas où il n'y a pas de brouillard F, et un deuxième exemple de courbe de niveaux de gris CL2 est illustré sur la Fig. 5 dans le cas où il existe du brouillard F.

Comme on peut le voir, pour une courbe de niveaux de gris CL, en abscisse est indiqué le numéro de ligne Ln dans l'image acquise I, tandis qu'en ordonnée est indiqué la valeur de niveau de gris GR attribué.

Sur ces deux courbes de niveaux de gris CL1 et CL2, on a également placé la ligne d'horizon H qui se trouve environ à l'abscisse 220.

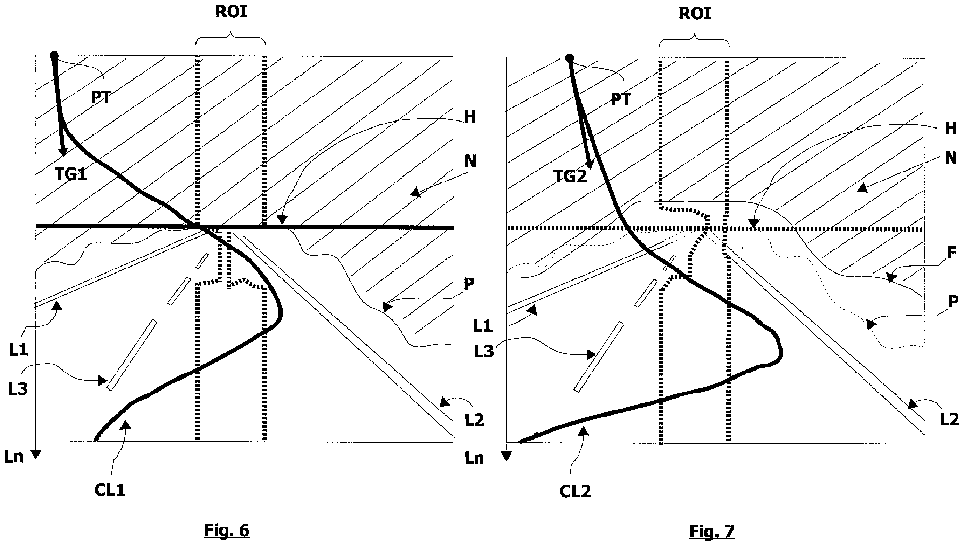

Comme on peut le voir sur les Fig. 6 et 7, les courbes de niveaux de gris CL1 et CL2 associées respectivement aux images acquises I en l'absence de brouillard F et lors de la présence de brouillard F sont superposées aux images I associées (elles ont été basculées de 90° par rapport aux Fig. 4 et 5 précédentes).

On notera que dans le cas où le temps d'intégration de la caméra CAM est connu, une courbe de niveau de gris CL peut être, dans des modes de réalisation non limitatifs, soit une courbe de luminance soit une courbe de luminosité.

On rappelle que le temps d'intégration de la caméra CAM correspond au temps d'exposition à la lumière des capteurs de la caméra.

**Dans une quatrième étape 4),** on calcule au moins une tangente TG à partir d'un point d'intérêt PT dans ladite courbe de niveaux de gris CL.

Dans un mode de réalisation non limitatif, le point d'intérêt PT est un point caractéristique d'un début de diffusion de lumière au dessus de la coupure d'un faisceau lumineux FX émis par des projecteurs PJ du véhicule V en présence du brouillard F.

En effet, en présence de brouillard F, la courbe de niveaux de gris CL2 va varier de façon significative à partir de ce point d'intérêt PT par rapport à la courbe de référence CL1 sans brouillard F.

On se base sur le fait qu'en l'absence de brouillard F, il n'existe pas de diffusion de lumière au dessus de la coupure du faisceau lumineux FX émis par les projecteurs PJ, alors qu'il en existe en présence de brouillard F, cette diffusion étant en effet due à la réflexion du faisceau lumineux FX des projecteurs PJ sur les particules de brouillard F. On rappelle que la coupure du faisceau lumineux FX est de l'ordre de -1% en dessous de la ligne d'horizon.

Dans une variante de réalisation de ce mode, le point d'intérêt PT se trouve au dessus de la ligne d'horizon H de l'image acquise I. Cela permet d'être indépendant des caractéristiques de la route (sol, route mouillée etc) et de manière générale de la scène routière (arbre, talus). En effet, la partie haute de l'image I se trouvant au-dessus de cette ligne H est moins dépendante de la scène routière.

Dans un exemple non limitatif de cette variante, le point d'intérêt PT est l'origine de la courbe. En effet, le point à l'origine de la courbe de niveaux de gris CL se trouve au dessus de la ligne d'horizon H comme illustré à la Fig. 7.

L'avantage de cet exemple, est qu'il n'existe pas de diffusion de lumière au-dessus de la ligne d'horizon H, due à l'éclairage des projecteurs, en l'absence de brouillard F, alors qu'il en existe en présence de brouillard F comme vu précédemment.

L'analyse de la courbe de niveau de gris, et notamment du coefficient directeur passant par la tangente en ce point d'intérêt va permettre de mettre en exergue cette diffusion de lumière.

**Dans une cinquième étape 5),** on détermine le coefficient directeur CF, appelé également pente, à partir de ladite tangente TG.

Comme on va le voir en détail ci-après, le coefficient directeur CF est caractéristique d'un changement de l'environnement de l'atmosphère autour du véhicule V. De plus, à partir de ce coefficient directeur CF, on va pouvoir calculer une distance de visibilité DVM.

Ainsi, le coefficient directeur CF va permettre de constater la présence de brouillard F et de déduire sa densité, soit directement au moyen de valeurs seuils, soit via la distance de visibilité DVM comme décrit ci-après.

**Dans une sixième étape 6),** on détermine la présence de brouillard F et sa densité.

Dans un premier mode de réalisation, on détermine la présence de brouillard F et sa densité en fonction de plusieurs valeurs seuils VS dudit coefficient directeur CF.

Comme on va le voir, en analysant le coefficient directeur CF, on va pouvoir déterminer la présence de brouillard F et sa densité.

Plus particulièrement, la présence de brouillard est déterminée en fonction d'une valeur seuils VS. Par exemple, cette valeur est de 0.15 pour l'exemple non limitatif pris des projecteurs en position code.

En effet, lorsqu'il existe du brouillard F, on peut remarquer que le coefficient directeur CF de la tangente TG de la courbe de niveaux de gris CL a un gradient significatif (Fig. 5) par rapport à celui où le brouillard F est absent (Fig. 4).

Ainsi, en ce qui concerne la présence de brouillard F, lorsque le coefficient directeur CF est supérieur ou égal à un premier seuil VS1, on en déduit la présence de brouillard F. Dans un mode de réalisation non limitatif, ce premier seuil VS1 est égal à 0,15.

En dessous de ce seuil, le brouillard F n'est pas perceptible dans l'image I.

De plus, on peut également remarquer que lorsqu'il existe du brouillard, plus le brouillard F est dense, plus le coefficient directeur CF augmente.

On va ainsi pouvoir également déterminer la densité de brouillard F au moyen du coefficient directeur CF.

On utilise à cet effet deux autres seuils VS2 et VS3 correspondant chacun respectivement à une densité moyenne et forte de brouillard F.

Dans un mode de réalisation non limitatif :

- le premier seuil VS1 = 0,15 (entre ce seuil et le deuxième seuil VS2, on en déduit que le brouillard est faiblement dense).
- le deuxième seuil VS2 = 0,46 (entre ce seuil et le troisième seuil VS3, on en déduit que le brouillard est moyennement dense) ; et
- le troisième seuil VS3 = 0,77 (au delà de ce seuil, on en déduit que le brouillard est très dense).

On notera que la densité du brouillard F est fonction d'une distance de visibilité DVM.

Ainsi, lorsque le brouillard F est de :

- faible densité, la distance de visibilité DVM correspondante se situe au-delà de 100 mètres (ente 100 et 150 mètres par exemple),
- moyenne densité, la distance de visibilité DVM correspondante se situe entre 60 mètres et 100 mètres, et
- forte densité, la distance de visibilité DVM correspondante est de moins de 60 mètres.

Dans un deuxième mode de réalisation, on détermine la présence de brouillard F et sa densité en fonction d'une distance de visibilité DVM, cette dernière étant déterminée en fonction du coefficient directeur CF.

Dans un mode de réalisation non limitatif, la relation entre la distance de visibilité DVM et le coefficient directeur CF est égale à :

$$DVM = 61.5\text{-}75*CF \quad [1]$$

On notera que dans ce cas, cette relation [1] ne dépend pas du type de bitume, de la qualité de la route, ou tout autre caractéristique de la route comme décrit précédemment.

De plus, cette relation [1] est indépendante du tangage du véhicule V (tangage dû au freinage ou à une accélération), car elle ne dépend pas de la ligne d'horizon H.

En effet, lorsqu'il existe un tel tangage, le point d'intérêt PT déterminé est uniquement translaté dans l'image acquise I par rapport à l'image précédente sans tangage, (vers le haut quand le véhicule freine, et vers le bas quand le véhicule accélère).

Il n'est donc pas besoin de prendre en compte ce tangage dans le calcul de la distance de visibilité DVM.

Bien entendu, d'autres coefficients peuvent être utilisés.

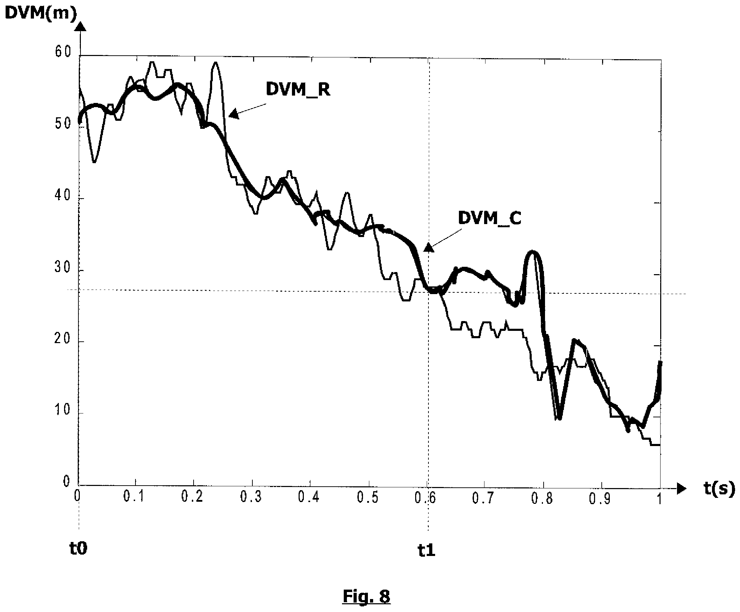

La Fig. 8 illustre un exemple non limitatif de variations de la distance de visibilité DVM (en ordonnée en mètres) en fonction du temps (en abscisse en secondes).

La première courbe DVM_R concerne des données empiriques de la distance de visibilité qui ont été relevées au cours du temps lors de tests réels.

La deuxième courbe DVM_C concerne la distance de visibilité DVM calculée selon la relation [1] au cours du temps.

On remarque que la deuxième courbe DVM_C est très proche de la première courbe DVM_R. Ainsi, le calcul de la distance de visibilité en fonction du coefficient directeur CF selon la relation [1] est un indicateur fiable qui permet de donner des valeurs fiables de la distance de visibilité DVM par rapport à la distance de visibilité réelle.

Par ailleurs, on peut voir, que la distance de visibilité DVM diminue au cours du temps. On est ainsi entré dans une nappe de brouillard de faible densité à t0=0 (CF = 0,15 et DVM = 50,25 et le brouillard F devient moyennement dense au bout d'environ t1=0,6 secondes (CF = 0,46 et DVM = 27).

Selon la distance de visibilité DVM ainsi calculée, on peut ainsi également en déduire la présence de brouillard F et sa densité.

Ainsi, dans un exemple non limitatif lorsque la distance de visibilité est inférieure à 150 mètres, on peut en déduire qu'il existe du brouillard F.

Par ailleurs, en ce qui concerne la densité, lorsque la distance de visibilité est inférieure à 60 mètres, on peut en déduire que le brouillard F est de forte densité, tandis que lorsqu'elle est supérieure à 60 mètres et au-delà, on peut en déduire que le brouillard F est de moyenne (60-100 mètres) à faible densité (100-150 mètres).

De plus, le calcul de la distance de visibilité DVM permet de fournir par la suite au conducteur du véhicule V une information sur la vitesse maximale Vmax à ne pas dépasser pour ne pas être en danger, et garantir ainsi une distance de sécurité optimale. Dans un exemple non limitatif, pour une vitesse de 90 km/h, on sait que la distance d'arrêt est d'environ 80 mètres.

Bien entendu, on peut également combiner ces deux modes de réalisation (utilisation des seuils VS et calcul de la distance de visibilité DVM) afin d'affiner la détection du brouillard F et le calcul de sa densité, soit en parallèle, soit l'un après l'autre.

**Dans une septième étape 7),** après que du brouillard F a été détecté et sa densité déterminée, un traitement adéquate CD en temps réel sur le véhicule V peut être exécuté.

Dans des exemples non limitatifs, il peut s'agir :

- d'adapter automatiquement l'éclairage des projecteurs PJ véhicule V en augmentant l'intensité des projecteurs PJ Code ou Route (par exemple pour mieux visualiser les lignes blanches de la route) et/ou en allumant les feux de brouillard (avants et arrières) ; ou

- d'envoyer un signal d'alerte au conducteur du véhicule V de manière à ce qu'il augmente lui-même l'intensité des projecteurs PJ par exemple s'il peut le faire pour éclairer plus ou qu'il allume lui-même les feux de brouillard ; ou

- de commuter automatiquement les projecteurs PJ de Code ou en Route ou inversement ; ou

- de limiter automatiquement la vitesse du véhicule à une vitesse maximale autorisée Vmax dans ce cas ; ou

- d'envoyer un signal d'alerte au conducteur du véhicule V pour qu'il diminue sa vitesse en fonction d'une vitesse maximale autorisée etc.

Selon la densité du brouillard F, dans des exemples non limitatifs, on peut déterminer :

- un seuil d'allumage des feux de brouillard pour une distance de visibilité DVM donnée ; et

- un seuil de commutation automatique des projecteurs PJ de Code en Route pour une distance de visibilité DVM supérieure ou égale à un seuil donné ; ou

- un seuil de commutation automatique des projecteurs PJ de Route en Code pour une distance de visibilité DVM inférieure à un seuil donné etc.

On notera que ces différents seuils peuvent être définis dans des exemples non limitatifs selon une réglementation existante ou selon une norme constructeur.
On notera que cette septième étape se fait au fur et à mesure du traitement des images vidéo I par le procédé décrit ci-dessus.
Ainsi, le traitement adéquate CD, tel que par exemple l'adaptation automatique de l'éclairage des projecteurs PJ en Code ou en Route, est exécuté en temps réel puisqu'il est effectué après chaque détection d'un phénomène perturbateur F, une détection étant effectuée à chaque acquisition d'image I.
Le procédé de l'invention est mis en oeuvre par un dispositif DISP de détection représenté à la Fig. 9.
Ce dispositif DISP est intégré dans le véhicule V.Ce dispositif DISP comporte notamment :

- une unité de contrôle UC pour :

  - déterminer une région d'intérêt ROI dans dans une image I acquise de l'environnement E du véhicule V ;

  - déterminer une courbe de niveaux de gris CL à partir de ladite région d'intérêt ROI ;

  - calculer au moins une tangente à partir d'un point d'intérêt PT dans ladite courbe de niveaux de gris CL ; et

  - déterminer un coefficient directeur CF à partir de ladite tangente TG.

L'unité de contrôle UC permet en outre de commander le projecteur PJ et la caméra CAM et de commander (adaptation automatique de l'éclairage des projecteurs PJ en Code ou Route, allumage automatique des feux de brouillards) ou d'effectuer (envoi d'un signal d'alerte) le traitement adéquat CD.
Dans un mode de réalisation non limitatif, le dispositif de détection DISP peut en outre comporter la caméra vidéo CAM permettant d'acquérir une image I telle qu'illustrée à la Fig. 9. On notera que dans ce cas, l'unité de contrôle UC peut également se trouver dans la caméra vidéo CAM.
La caméra CAM est placée dans un exemple non limitatif derrière le pare-brise du véhicule V. Dans un autre exemple non limitatif, la caméra CAM est placée près d'un des projecteurs PJ du véhicule V.
Elle est par exemple du type VGA de définition 640*480 (soit une image acquise I de 8 bits (par pixel) et de 640 colonnes et 480 lignes) et comporte une lentille (non représentée) à cet effet. L'image I ainsi acquise est en pleine résolution.
A chaque pixel Px est attribuée une valeur spécifique GR appelée valeur de niveau de gris suite aux traitements utilisés dans la caméra (gestion du temps d'intégration, de la courbe de réponse de la caméra, gain etc). Cette valeur de niveau de gris peut être exprimée en différents formats, par exemple en 8bit, 12bit ou autre.
Par exemple, le niveau de gris du pixel en 8bit peut avoir une valeur entre 0 et 255, tandis que le niveau de gris du pixel en 12bit peut avoir une valeur entre 0 et 4095.
Dans un exemple non limitatif, la caméra vidéo CAM acquiert 10 images par seconde.
Bien entendu, une caméra de type différent et avec une résolution différente peut être utilisée.
Bien entendu, la caméra CAM qui est utilisée pour la fonctionnalité détection de brouillard F peut être également utilisée pour d'autres fonctionnalités connues telles que :

- la détection de lignes pour le marquage au sol (permettant d'éviter un franchissement involontaire des lignes),
- la commutation automatique des projecteurs Route en Code ou inversement lors de l'apparition d'un véhicule devant le véhicule considéré (permettant d'éviter d'éblouir le véhicule devant), etc.

On notera que toutes les étapes du procédé décrit ci-dessus sont effectuées pour une ou plusieurs (séquence SQ) images acquises I par la caméra vidéo CAM et ce en temps réel. C'est-à-dire que l'ensemble des étapes ne prend pas plus de 1/10 seconde dans l'exemple d'une séquence de 10 images par seconde acquises par la caméra CAM. Le procédé est donc très rapide s'exécuter.

On notera que la mise en oeuvre du procédé de détection exposé ci-dessus peut être effectuée au moyen d'un dispositif micro programmé « software », d'une logique câblée et/ou de composants électroniques « hardware ».

Ainsi, le dispositif de détection DISP peut comporter un produit programme d'ordinateur PG comportant une ou plusieurs séquences d'instructions exécutables par une unité de traitement d'information telle qu'un microprocesseur, ou d'une unité de traitement d'un micro-contrôleur, d'un ASIC, d'un ordinateur etc., l'exécution desdites séquences d'instructions permettant une mise en oeuvre du procédé décrit.

Un tel programme d'ordinateur PG peut être inscrit en mémoire non volatile inscriptible de type ROM ou en mémoire non volatile ré-inscriptible de type EEPROM ou FLASH. Ledit programme d'ordinateur PG peut être inscrit en mémoire en usine ou encore chargé en mémoire ou téléchargé à distance en mémoire. Les séquences d'instructions peuvent être des séquences d'instructions machine, ou encore des séquences d'un langage de commande interprétées par l'unité de traitement au moment de leur exécution.

Dans l'exemple non limitatif de la Fig. 9, le programme d'ordinateur PG est inscrit dans une mémoire de l'unité de contrôle UC du dispositif DISP.

Bien entendu, la description du procédé n'est pas limitée aux modes de réalisation et exemples décrits ci-dessus.

Ainsi, l'exemple décrit ci-dessus pour les projecteurs PJ en position Code n'est pas limitatif, et le même principe peut être appliqué pour des projecteurs PJ en position Route avec des distances de visibilité DVM allant de 0 à au delà de 150 mètres (les projecteurs en position Route éclairant plus qu'en position Code), et avec une relation [1] similaire.

Par ailleurs, on peut très bien utiliser le procédé décrit avec une caméra arrière et des projecteurs arrières à infrarouge (non visible pour l'oeil humain de sorte à ne pas éblouir un conducteur d'un véhicule suiveur) pour effectuer un traitement adéquate CD tel que par exemple allumer les feux de brouillard.

Par ailleurs, si la région d'intérêt ROI déterminée n'est pas assez homogène, on peut ne pas l'utiliser et attendre la détermination de la région d'intérêt ROI sur l'image acquise I suivante.

Par ailleurs, bien que l'exemple d'une seule tangente et d'un seul coefficient directeur ait été pris, on peut également utiliser plusieurs tangentes et plusieurs coefficients directeurs associés afin de vérifier et fiabiliser la mesure du brouillard.

Enfin, bien entendu elle peut s'appliquer à des applications différentes de l'application véhicule automobile décrite. par exemple, on peut envisager une détection de brouillard par un appareillage fixe, par exemple au voisinage d'une autoroute, et utiliser le résultat de la détection positive pour activer des signaux d'alerte (également fixes, par exemple sur les portiques au dessus des chaussées) pour avertir les conducteurs.

Ainsi, l'invention présente notamment les avantages suivants :

- Elle permet de détecter la présence d'un phénomène perturbateur F tel que le brouillard et d'effectuer un traitement adéquat CD ;

- Elle permet de détecter la présence de brouillard lorsque les projecteurs PJ sont notamment en position Code, évitant ainsi une commutation automatique en position Route lorsque cela n'est pas nécessaire ; Ainsi, le conducteur ne sera plus ébloui et incommodé par des oscillations de positions des projecteurs PJ ;

- Elle permet de déterminer la densité du brouillard F ;

- Elle permet de déterminer la distance de visibilité DVM pour un utilisateur du véhicule V ;

- Elle est simple à mettre en oeuvre (la détermination d'une région d'intérêt, d'une courbe de niveaux de gris et le calcul d'une tangente et d'un coefficient directeur sont faciles à traiter) ;

- Elle est facilement intégrable dans un système d'éclairage et de signalisation tel qu'un feu ou un projecteur (caméra, software/hardware) sans implantation contraignante sur la carrosserie d'un véhicule ;

- Elle permet d'anticiper la présence de brouillard en détectant à l'avance l'approche d'une nappe de brouillard avant que le véhicule ne s'y engage, et ce grâce à l'évolution temporelle du coefficient directeur CF ;

- Elle permet d'éviter d'utiliser deux caméras, une pour la fonction de détection d'un phénomène perturbateur et une pour une fonction de détection de ligne par exemple. On peut en effet regrouper deux fonctions dans une seule caméra qui est multi-fonctions.

**Revendications**

1. Procédé de détection d'un phénomène (F) créant une perturbation atmosphérique de sorte à engendrer une perte de visibilité pour un utilisateur d'un véhicule automobile (V), comportant les étapes de :

- déterminer une région d'intérêt (ROI) dans une image (I) acquise de l'environnement (E) du véhicule (V), la région d'intérêt étant verticale et occupant des parties de l'image (I) de part et d'autre de la ligne d'horizon (H) ;
- déterminer une courbe de niveaux de gris (CL), en ne prenant en compte que la valeur médiane des niveaux de gris des pixels situés dans la région d'intérêt (ROI) des lignes de l'image (I) ;
- calculer au moins une tangente (TG) à partir d'un point d'intérêt (PT) dans ladite courbe de niveaux de gris (CL), ce point (PT) étant situé au dessus de la ligne d'horizon (H) ;
- déterminer un coefficient directeur (CF) à partir de ladite tangente (TG) ;
- déduire la présence du phénomène (F) à partir de la valeur du coefficient directeur (CF) déterminé.
- déterminer la présence d'un phénomène perturbateur (F) en fonction d'au moins une valeur seuil (VS) dudit coefficient directeur (CF).

Le procédé étant **caractérisé en ce qu'**il comporte les étapes supplémentaires suivantes:

- déduire la présence du brouillard lorsque le coefficient directeur est supérieur ou égal à un premier seuil VS1 et déduire que le brouillard n'est pas perceptible dans l'image (I) lorsque le coefficient directeur est en-dessous de ce seuil VS1.

2.  Procédé de détection selon la revendication 1, selon lequel il comporte une étape supplémentaire de :

- déterminer une distance de visibilité (DVM) en fonction du coefficient directeur déterminé (CF).

3.  Procédé de détection selon l'une des revendications précédentes, selon lequel le point d'intérêt (PT) est un point caractéristique d'un début de diffusion de lumière au dessus de la coupure d'un faisceau lumineux (FX) émis par des projecteurs (PJ) du véhicule (V) en présence du phénomène perturbateur de visibilité (F).

4.  Procédé de détection selon l'une des revendications précédentes, selon lequel le point d'intérêt (PT) est l'origine de la courbe de niveaux de gris (CL).

5.  Procédé de détection selon l'une des revendications précédentes, selon lequel le véhicule (V) comporte un angle au volant, et ladite région d'intérêt (ROI) est déterminée dans ladite image (I) en fonction dudit angle au volant ($\alpha$).

6.  Dispositif (DISP) de détection d'un phénomène (F) créant une perturbation atmosphérique de sorte à engendrer une perte de visibilité pour un utilisateur d'un véhicule automobile (V), comportant :

- une unité de contrôle (UC) pour :

- déterminer une région d'intérêt (ROI) dans une image (I) acquise de l'environnement (E) du véhicule (V), la région d'intérêt étant verticale et occupant des parties de l'image (I) de part et d'autre de la ligne d'horizon (H) ;
- déterminer une courbe de niveaux de gris (CL), en ne prenant en compte que la valeur médiane des niveaux de gris des pixels situés dans la région d'intérêt (ROI) des lignes de l'image (I) ;
- calcule au moins une tangente (TG) à partir d'un point d'intérêt (PT) dans ladite courbe de niveaux de gris (CL), ce point (PT) étant situé au dessus de la ligne d'horizon (H) ;
- détermine un coefficient directeur (CF) à partir de ladite tangente (TG) ;
- déduit la présence du phénomène (F) à partir de la valeur du coefficient directeur (CF) déterminé.
- déterminer la présence d'un phénomène perturbateur (F) en fonction d'au moins une valeur seuil (VS) dudit coefficient directeur (CF).

Le dispositif étant **caractérisé en ce que** l'unité de contrôle (UC):

déduit la présence de brouillard lorsque le coefficient directeur est supérieur ou égal à un premier seuil VS1 et déduit que le brouillard n'est pas perceptible dans l'image (I) lorsque le coefficient directeur est en-dessous de ce seuil VS1.

7.  Produit programme (PG) d'ordinateur comportant une ou plusieurs séquences d'instructions exécutables par une unité de traitement d'information, l'exécution desdites séquences d'instructions permettant une mise en oeuvre du procédé selon l'une quelconque des revendications précédentes 1 à 5.

**Patentansprüche**

1.  Verfahren zur Erfassung eines Phänomens (F), das eine derartige atmosphärische Störung erzeugt, dass ein Sichtbarkeitsverlust für einen Benutzer eines Kraftfahrzeugs (V) verursacht wird, das die folgenden Schritte aufweist:

- Bestimmen eines interessierenden Bereichs (ROI) in einem von der Umgebung (E) des Fahrzeugs (V) aufgenommenen Bild (I), wobei der interessierende Bereich senkrecht ist und Teile des Bilds (I) zu beiden Seiten des Horizonts (H) einnimmt;

- Bestimmen einer Kurve von Graupegeln (CL) unter Berücksichtigung nur des Mittelwerts der Graupegel der Pixel, die sich im interessierenden Bereich (ROI) der Linien des Bilds (I) befinden;

- Berechnen mindestens einer Tangente (TG) ausgehend von einem interessierenden Punkt (PT) in der Kurve von Graupegeln (CL), wobei dieser Punkt (PT) sich über dem Horizont (H) befindet;

- Bestimmen eines Richtkoeffizienten (CF) ausgehend von der Tangente (TG);

- Ableiten des Vorhandenseins des Phänomens (F) ausgehend vom Wert des bestimmten Richtkoeffizienten (CF);

- Bestimmen des Vorhandenseins eines Störphänomens (F) abhängig von mindestens einem Schwellwert (VS) des Richtkoeffizienten (CF);

wobei das Verfahren **dadurch gekennzeichnet ist, dass** es die folgenden zusätzlichen Schritte aufweist:

- Ableiten des Vorhandenseins des Nebels, wenn der Richtkoeffizient gleich einer oder höher als eine erste Schwelle VS1 ist, und Ableiten, dass der Nebel nicht im Bild (I) wahrnehmbar ist, wenn der Richtkoeffizient unter dieser Schwelle VS1 liegt.

2. Erfassungsverfahren nach Anspruch 1, wobei es einen zusätzlichen Schritt aufweist:

- Bestimmen einer Sichtbarkeitsentfernung (DVM) abhängig vom bestimmten Richtkoeffizient (CF).

3. Erfassungsverfahren nach einem der vorhergehenden Ansprüche, wobei der interessierende Punkt (PT) ein charakteristischer Punkt eines Beginns der Lichtausbreitung oberhalb der Hell/Dunkelgrenze eines von Scheinwerfern (PJ) des Fahrzeugs (V) ausgestrahlten Lichtstrahls (FX) in Gegenwart des Sichtbarkeits-Störphänomens (F) ist.

4. Erfassungsverfahren nach einem der vorhergehenden Ansprüche, wobei der interessierende Punkt (PT) der Beginn der Kurve von Graupegeln (CL) ist.

5. Erfassungsverfahren nach einem der vorhergehenden Ansprüche, wobei das Fahrzeug (V) einen Lenkradwinkel aufweist und der interessierende Bereich (ROI) im Bild (I) abhängig vom Lenkradwinkel ($\alpha$) bestimmt wird.

6. Vorrichtung (DISP) zur Erfassung eines Phänomens (F), das eine derartige atmosphärische Störung erzeugt, dass ein Sichtbarkeitsverlust für einen Benutzer eines Kraftfahrzeugs (V) verursacht wird, die aufweist:

- eine Steuereinheit (UC), um:

- einen interessierenden Bereich (ROI) in einem von der Umgebung (E) des Fahrzeugs (V) aufgenommenen Bild (I) zu bestimmen, wobei der interessierende Bereich senkrecht ist und Teile des Bilds (I) zu beiden Seiten des Horizonts (H) einnimmt;

- eine Kurve von Graupegeln (CL) zu bestimmen, indem nur der Mittelwert der Graupegel der Pixel berücksichtigt wird, die sich im interessierenden Bereich (ROI) der Linien des Bilds (I) befinden;

- berechnet mindestens eine Tangente (TG) ausgehend von einem interessierenden Punkt (PT) in der Kurve von Graupegeln (CL), wobei dieser Punkt (PT) sich über dem Horizont (H) befindet;

- bestimmt einen Richtkoeffizienten (CF) ausgehend von der Tangente (TG);

- Leitet das Vorhandensein des Phänomens (F) ausgehend vom Wert des bestimmten Richtkoeffizienten (CF) ab;

- das Vorhandensein eines Störphänomens (F) abhängig von mindestens einem Schwellwert (VS) des Richtkoeffizienten (CF) zu bestimmen,

wobei die Vorrichtung **dadurch gekennzeichnet ist, dass** die Steuereinheit (UC):

- das Vorhandensein von Nebel ableitet, wenn der Richtkoeffizient höher als eine oder gleich einer ersten Schwelle VS1 ist, und ableitet, dass der Nebel nicht im Bild (I) wahrnehmbar ist, wenn der Richtkoeffizient unter dieser Schwelle VS1 liegt.

7. Computerprogrammprodukt (PG), das eine oder mehrere Folgen von Anweisungen aufweist, die von einer Datenverarbeitungseinheit ausführbar sind, wobei die Ausführung der Folgen von Anweisungen eine Durchführung des Verfahrens nach einem der vorhergehenden Ansprüche 1 bis 5 ermöglicht.

## Claims

1. Method for detecting a phenomenon (F) creating an atmospheric disturbance so as to generate a loss of visibility for a user of a motor vehicle (V), comprising the steps of:

   - determining a region of interest (ROI) in an acquired image (I) of the environment (E) of the vehicle (V), the region of interest being vertical and occupying parts of the image (I) on either side of the horizon line (H);
   - determining a curve of grey levels (CL), by taking into account only the median value of the grey levels of the pixels situated in the region of interest (ROI) of the lines of the image (I);
   - calculating at least one tangent (TG) from a point of interest (PT) in said curve of grey levels (CL), this point (PT) being situated above the horizon line (H);
   - determining a directing coefficient (CF) from said tangent (TG);
   - deducing the presence of the phenomenon (F) from the value of the determined directing coefficient (CF);
   - determining the presence of a disturbing phenomenon (F) as a function of at least one threshold value (VS) of said directing coefficient (CF),

   the method being **characterized in that** it comprises the following additional steps:

   - deducing the presence of fog when the directing coefficient is greater than or equal to a first threshold VS1 and deducing that the fog is not perceptible in the image (I) when the directing coefficient is below this threshold VS1.

2. Detection method according to Claim 1, according to which it comprises an additional step of:

   - determining a visibility distance (DVM) as a function of the determined directing coefficient (CF).

3. Detection method according to one of the preceding claims, according to which the point of interest (PT) is a point characteristic of a start of light diffusion above the cut-off of a light beam (FX) emitted by the headlights (PJ) of the vehicle (V) in the presence of the visibility disturbing phenomenon (F).

4. Detection method according to one of the preceding claims, according to which the point of interest (PT) is the origin of the curve of grey levels (CL).

5. Detection method according to one of the preceding claims, according to which the vehicle (V) comprises a steering angle, and said region of interest (ROI) is determined in said image (I) as a function of said steering angle ($\alpha$).

6. Device (DISP) for detecting a phenomenon (F) creating an atmospheric disturbance so as to generate a loss of visibility for a user of a motor vehicle (V), comprising:

   - a control unit (UC) for:

     - determining a region of interest (ROI) in an acquired image (I) of the environment (E) of the vehicle (V), the region of interest being vertical and occupying parts of the image (I) on either side of the horizon line (H);
     - determining a curve of grey levels (CL), by taking into account only the median value of the grey levels of the pixels situated in the region of interest (ROI) of the lines of the image (I);
     - calculates at least one tangent (TG) from a point of interest (PT) in said curve of grey levels (CL), this point (PT) being situated above the horizon line (H);
     - determines a directing coefficient (CF) from said tangent (TG);
     - deduces the presence of the phenomenon (F) from the value of the determined directing coefficient (CF),
     - determining the presence of a disturbing phenomenon (F) as a function of at least one threshold value (VS) of said directing coefficient (CF),

   the device being **characterized in that** the control unit (UC) :

     deduces the presence of fog when the directing coefficient is greater than or equal to a first threshold VS1 and deduces that the fog is not perceptible in the image (I) when the directing coefficient is below this threshold VS1.

7. Computer program product (PG) comprising one or more sequences of instructions that can be executed by an information processing unit, the execution of said sequences of instructions making it possible to implement the method according to any one of the preceding claims 1 to 5.

ACQ_SQ(I) — 1

CALC_ROI(I) — 2

CALC_CL(ROI) — 3

CALC_TG(CL, PR) — 4

CALC_CF(TG) — 5

CALC_F(VS)/CALC_DVM(CF) — 6

CD — 7

**Fig. 1**

Fig. 2

Fig. 3

Fig. 4

Fig. 5

Fig. 6

Fig. 7

Fig. 8

Fig. 9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Automatic fog detection and estimation of visibility distance through use of an onboard camera. **NICO-LAS HAUTIÈRE et al.** Machine Vision and Application. Springer-Verlag, 01 Avril 2006, vol. 17